# EUROPEAN PATENT APPLICATION

(11) **EP 2 538 328 A1**
(43) Date of publication of application: **26.12.2012**
(21) Application number: 11170839.2
(22) Date of filing: 21.06.2011
(51) Int. Cl.: G06F 9/50

(54) **A method of provisioning a cloud-based render farm**

(71) Applicant: Unified Computing Limited, County Cork (IE)
(72) Inventor: Kennedy, James, County Cork (IE); Healy, Philip, County Cork (IE)
(74) Representative: O'Connor, Michael Donal

(57) **Abstract**

This invention relates to a method of provisioning a cloud-based render farm. Cloud-based render farms are relatively difficult to establish and require skilled IT personnel to create and operate. This represents a significant cost to smaller 3D studios and a substantial drain on the resources of the larger 3D studios' IT departments. According to the present invention, the steps of establishing a cloud-based render farm are simplified through the appropriate use of a provisioning module. All that is required of the IT staff or artist is to nominate the number of render machines and the amount of storage area required in the render farm and in some instances the rendering software and plugins required. The remaining steps of the method are performed by the provisioning module and/or a cloud-based render farm controller. In this way, cloud-based render farms can be established quickly with the minimum amount of difficulty and skill required. Once created, rendering jobs can be allocated to a render farm by dragging and dropping a job icon onto a render farm icon on a user interface.

## Description

This invention relates to a method of provisioning a cloud-based render farm. In particular, this invention relates to a method of provisioning a cloud-based render farm for use in rendering 3D scene files.

Artists in 3D studios describe their animations in scene files. In order to view the animation described in the scene file, rendering software is used to read the scene file and draw images that are representative of each frame described in the scene file. The process of rendering a scene file is notoriously computationally expensive.

Typically, a scene file will contain many frames. For example, there are usually 26 frames per second of animation and a scene file with a relatively short animation of 30 seconds duration will contain 780 frames. Each frame can take up to approximately 20 minutes to render, even on a powerful processor, thereby resulting in a total processing time of 15600 minutes (260 hours). Fortunately, the individual frames of a scene file can be processed in parallel. Accordingly, many 3D studios use computer clusters, commonly referred to as render farms, to compute multiple frames simultaneously. The individual processors in the render farms are often referred to as render nodes. A render farm with more than 260 render nodes should be able to render the scene file of the above-example in one hour or less provided that uninterrupted access to all 260+ machines is provided.

Many 3D studios have their own in-house render farms and they render their scene files on their own render farms as much as possible. However, in some cases, due to the sheer volume of scene files that must be rendered and/or in order to meet a particular deadline, the 3D studios will outsource at least some of their scene file rendering to a cloud-based rendering provider. There are a number of such providers including Amazon ® Web Services ® and Microsoft Azure ® to name just two. Furthermore, many smaller 3D studios do not have their own render farms due to the expense of establishing and maintaining a render farm and these smaller 3D studios usually rely solely on third party rendering providers such as the cloud-based rendering providers.

There is however a problem with the use of cloud-based rendering providers. The task of setting up a rendering session is relatively complex and typically requires the services of an IT expert proficient in systems administration. Even then, typically it takes a significant period of time to set up the session to ensure the secure transmission of data through the cloud. This requirement of having to provide skilled IT experts is a significant burden on the smaller 3D studios in particular and in the larger studios represents a drain on the resources of the IT department. This represents a barrier to more widespread use of the cloud-based rendering farms.

For those 3D studios unable or unwilling to use the services of the cloud-based rendering farms and without access or unable to use their own rendering farm, the only option open to them is to store the scene file on a memory device and physically transport that memory device to a render farm provider. The render farm provider will then render the scene file, save the rendered scene file to a memory device and ship that memory device back to the 3D studio. As one would imagine, this introduces unacceptable delays in most cases and is not a preferred option.

It is an object of the present invention to provide a method of provisioning a cloud-based rendering farm that overcomes at least some of the problems with the known methods.

### Statements of Invention

According to the invention there is provided a method of provisioning a cloud-based render farm comprising the steps of:
a rendering management server receiving from an operator:
   (a) the desired number of nodes required in the cloud-based render farm; and
   (b) the desired amount of storage capacity required in the cloud-based render farm; and thereafter
a provisioning module accessible by the rendering management server in conjunction with a controller of the cloud-based render farm carrying out the following steps:
   (c) setting a region and an availability zone for the cloud-based render farm;
   (d) creating a security group for the render farm;
   (e) creating an encryption key pair for communication with the cloud-based render farm; and thereafter
the cloud-based render farm controller carrying out the following steps:
   (f) allocating a storage volume in the cloud-based render farm; and
   (g) allocating an identifying address to a head node of the cloud-based render farm; and
   (h) transmitting an identifying address of the head node to the rendering management server.

By having such a method, it will no longer be necessary to have skilled IT personnel to set up the cloud-based render farm. Furthermore, for those 3D studios with skilled IT personnel, the IT personnel can still control the creation and management of the render farm but the burden on the IT department will be significantly reduced as many complex administrative tasks are no longer necessary. All that is required to provision the cloud-based render farm is an instruction as to how many render nodes are required and how much storage capacity is required. Once that information has been provided, the method and the provisioning module in particular, will set up the cloud-based render farm according to the steps outlined above. No further interaction will be required in order to set up the cloud-based render farm although the progress of the setup will be available to the IT staff. It is believed that this will encourage more use of the cloud-based render farms as many of the problems associated with these cloud-based render farms have been obviated by the method according to the present invention.

By implementing such a method, each render farm will be a self-contained entity in the cloud with its own security group and access key to segregate it from other render farms owned by the same client and more importantly other cloud machines owned by third parties. Furthermore, the head node will be provisioned separately from the render nodes to provide shared services such as a central shared file system, a web server, and license management. The head node also provides a single point of input/output for the render farm as a whole. This is seen as particularly beneficial.

In addition to the above, a job manager, such as Torque ®, will be installed on the render farm to manage dynamically spreading work across individual render nodes and to accommodate dynamically increasing/decreasing the size of the render farm. The installation and configuration of Torque is itself quite a challenge as it is not known ahead of time what the internal cloud network addresses of the nodes involved will be. After the nodes have booted, it is necessary to collect each of the nodes addresses, forward these addresses to the head node and dynamically add the render nodes to the Torque job manager.

In one embodiment of the invention there is provided a method of provisioning a cloud based render farm in which the rendering management server also receives the following from the operator:
(i) the server attributes of each node, such as the number of processing cores, the processing capacity of each core and the amount of RAM per render node; and
(k) an indication of the rendering software and plugins required on the farm.

In one embodiment of the invention there is provided a method in which the provisioning module is located in the cloud remotely from the rendering management server and the method comprises the additional steps of:
(I) the rendering management server transmitting the desired number of nodes required in the cloud-based render farm and the desired amount of storage capacity required in the render farm to the remote provisioning module; and
(m) the address of the head node is transmitted to the rendering management server via the provisioning module.

In this way, it will not be necessary to provide a provisioning module on every server and the servers can contact the provisioning module directly. This is a very light method to implement and will require the minimum of intrusion and interaction with the 3D studio.

In one embodiment of the invention there is provided a method comprising the step of the provisioning module starting up a new instance of the head node machine image. Once the cloud-based rendering farm has been constructed, it may be put into use by the provisioning module booting up a head node machine. All communications with the render farm can be routed through the head node and the head node can control the output files as well as the load sharing across the render nodes. By having such a method and system, the head node can in fact be a relatively low processing-power machine.

In one embodiment of the invention there is provided a method in which once the new instance of the head node machine image is running, the method comprises the additional step of attaching the storage volume to the running instance of the head node.

In one embodiment of the invention there is provided a method comprising the step of the provisioning module launching new instances of a render node machine image.

In one embodiment of the invention there is provided a method comprising the steps of:
after the render node is running, the render node retrieving a start-up script from the head node; and
the render node executing the start-up script.

By retrieving and executing the start-up script, it is possible to customise the render node machine instance.

In one embodiment of the invention, the step of starting up a new instance of the head node machine image comprises providing a provisioning module daemon for installation on the head node. The provisioning module daemon will interact with the job manager on the head node which may be an open source job manager. In this way, the method can be used to operate with a number of different job manager types and versions.

In one embodiment of the invention, the step of starting up a new instance of the head node machine image comprises providing a job manager for installation on the head node. The job manager software may also have to be installed on the render nodes.

In one embodiment of the invention, the step of starting up a new instance of the head node machine image comprises selecting an operating system (OS) for use on the head node.

In one embodiment of the invention, the method comprises the step of creating a snapshot image of a previously instantiated, configured and stopped instance. By creating a snapshot of a former instance, this snapshot can then be used as the basis of new instances, obviating the need to perform software installation and some of the configuration in the future. This will reduce the time required to set up the farm.

In one embodiment of the invention, the step of starting up a new instance of the head node machine image comprises providing a Java virtual machine for installation on the head node. This is seen as a useful way to allow implementation of the provisioning module daemon. As an alternative to Java, it is envisaged that a native binary code may be used.

In one embodiment of the invention, the steps of starting up a new instance of the head node machine image and launching new instances of a render node machine image are performed by the provisioning module performing remote secure shell (ssh) commands on the cloud-based render farm.

In one embodiment of the invention, steps (c) to (h) are executed through Application Programming Interface (API) calls. This is seen as a particularly efficient way of performing the steps. As an alternative to API calls, command line tools or a web based interface could be used. However automation of this process through the command line tools would be possible but onerous as each step would involve starting a separate process and parsing the text output of that process. Furthermore, the web interface is only meant for manual operations; to automate this would involve screen scraping and be even more onerous. Therefore, API calls are seen as a particularly useful way of performing these steps.

In one embodiment of the invention, the state of the render farm is persisted after completion of each of steps (c) through (g). By doing so, this will prevent leakage of the render farm resources if one of the following steps should fail during execution.

In one embodiment of the invention, step (d) further comprises setting firewall rules. This will again reduce significantly the amount of work required by an IT person as this task can be quite labour-intensive.

### Detailed Description of the Intention

The invention will now be more clearly understood from the following description of some embodiments thereof given by way of example only with reference to the accompanying drawings, in which:-
Figure 1 is a diagrammatic representation of a render farm known in the art;
Figure 2 is a diagrammatic representation of a system in which the method according to the invention is performed;
Figure 3 is a diagrammatic representation of a system in which an alternative embodiment of the method according to the invention is performed;
Figure 4 is a diagrammatic representation of a system operating multiple render farms;
Figure 5 is a screen shot of a 3D artists scene file creation software;
Figure 6 is a screen shot of the IT departments render farm creation and control software showing the creation of a cloud-based render farm; and
Figure 7 is a screen shot of an IT department's cloud-based render farm creation and control software.

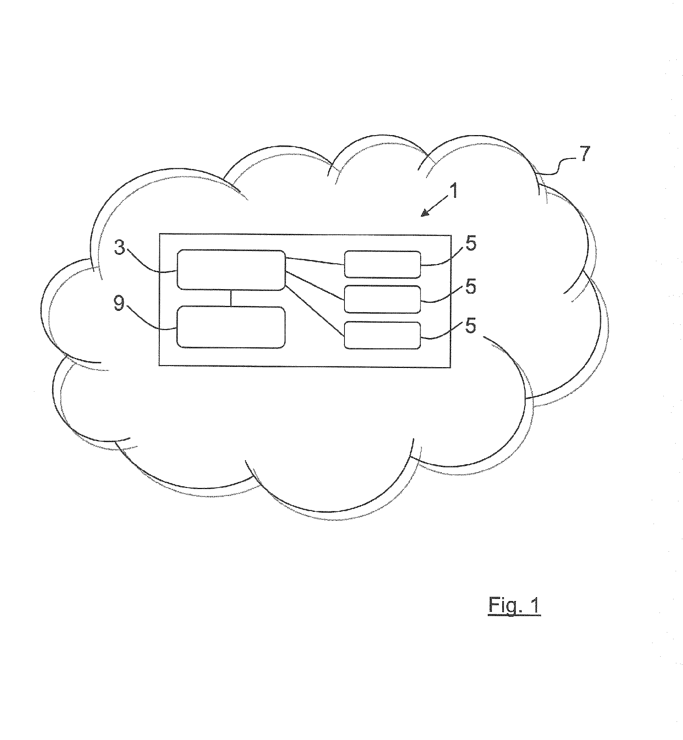

Referring to Figure 1, there is shown a configuration of cloud-based render farm known in the art, indicated generally by the reference numeral 1. The cloud-based render farm comprises a head node 3 and a plurality of render nodes, also commonly referred to as worker nodes 5. In the example shown, there are three render nodes 5 however it will be understood that usually there will be many times this number of render nodes. The head node 3 and the render nodes 5 are located in the cloud, represented graphically and in this instance assigned the reference numeral 7. In use, the head node 3 has access to memory 9 for storage of the output results of the render nodes 5 and has a job manager for distribution of a job across the available render nodes 5.

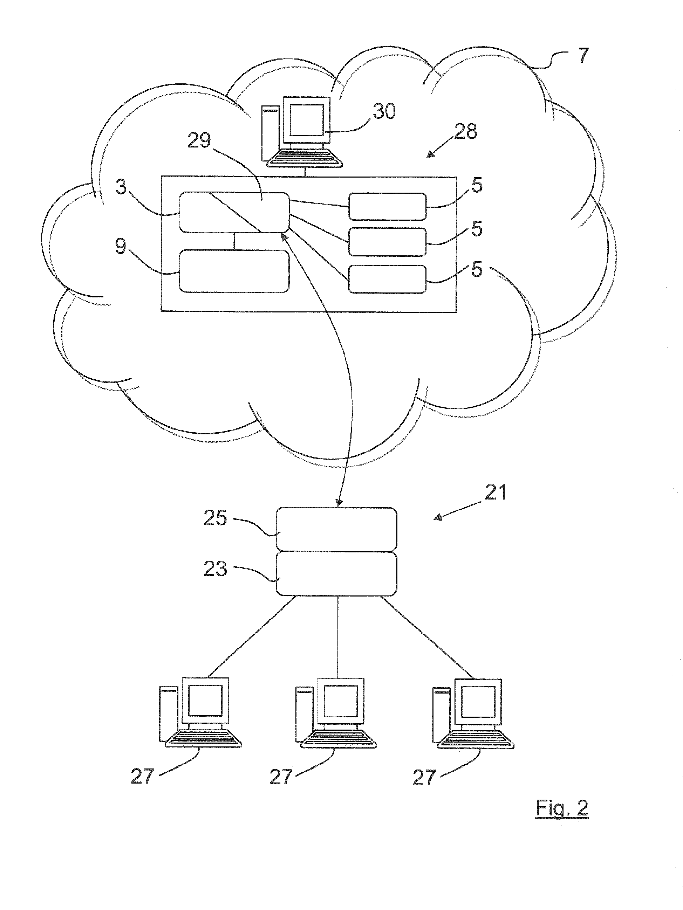

Referring now to Figure 2, there is shown a system, indicated generally by the reference numeral 21, in which the method according to the invention is performed, where like parts have been given the same reference numerals as before. The system 21 comprises a rendering management server 23 having a provisioning module 25 thereon. A plurality of client devices 27 that are present on a shared network with the server 23 are in communication with the server and all have access to a shared folder for jobs input and output on the shared network. The cloud-based render farm, indicated generally by the reference numeral 28, comprises a head node 3, a plurality of render nodes 5 and a memory 9, however in this instance the head node 3 further comprises a render management daemon 29 that has been loaded thereon in accordance with the present invention. The local rendering management server 23 will communicate directly with the cloud based render management daemon 29 once the farm has been provisioned. In the embodiment shown, the render farm is an Amazon ® web services ® cloud-based render farm provider. It will be understood that this could be another cloud provider and is not limited to Amazon ® web services ®.

In addition to the render management daemon, various software modules will be installed on the head node 3 and the render nodes 5 in accordance with the method. In addition to the render management daemon 29, the head node will comprise an operating system, in this case Unix OS, a Java virtual machine and a job manager program. The job manager program in this instance is Torque ® Job Manager Server. The render nodes 5 will each also have loaded thereon a Linux OS, a Torque Job Manager MOM and rendering software. The rendering software will be the rendering software specified by the artist and can be, for example, Render Man ®, Mental Ray ®, Blender ®, VRay ® and the like. The job manager in the present example is Torque ® Job Manager but could be another Job Manager such as PBS PRO ®, LSF ®, Qube ® or the like.

In use, an artist creates a scene file on their client device 27 and transmits a scene file rendering request to the rendering management server 23. The rendering management server 23 and the client device are on a common network with common access to a shared folder. A member of the IT staff, on noticing that a render job has been requested will determine the number of render nodes and the amount of storage capacity that will be required in order to process the job. It will be understood that these steps of determining the number of render nodes and the amount of storage capacity required could be done by the artist themselves if desired however it is often preferable to have a level of control over the creation, use and management of the server farms and accordingly it is usually recommended to utilise the services of an IT professional, albeit in a much more limited capacity and requiring less skill than was heretofore the case. The amount of render nodes and the amount of storage capacity required will vary from job to job and as will be understood depend on the size of the job, the urgency of the job and a plethora of other criteria. What is important however is that a decision is made as to the number of render nodes required and the amount of storage capacity required and that information is submitted to the rendering management server 23. Policy files created by IT staff will define rules which will allow the system to automate the decision making in certain circumstances.

The provisioning module 25 in conjunction with a controller 30 of the cloud-based render farm 28 carries out the steps of setting an availability zone for the cloud-based render farm, creating a security group for the render farm including setting firewall rules and creating an encryption key pair for communication with the cloud-based render farm. In the embodiment shown, the controller 30 has been represented diagrammatically as a PC however in actual fact the controller 30 is the Amazon ® EC2 API which is web service based. Different implementations may be used for other cloud providers. The provisioning module 25 makes calls to this API over the internet in order to carry out these steps.

In order to perform these tasks, the following steps are taken: First of all, the Region is specified using the appropriate region identifier string. Secondly, the Availability Zone within that region is specified using an appropriate region identifier string. Third, an ID for the cloud render farm is generated, ensuring this will be unique among all cloud render farms. Fourth, a security group named by the render farm ID is created. Fifth, the firewall rules are set for the security group. On Amazon ® these are known as "security group ingress rules". These rules should block all incoming connections other than those required for the functioning of the cloud render farm. Sixth, a key pair named by the render farm ID is created and the key material is stored in the local database. Finally, any storage volumes required by the user are allocated and the Amazon generated storage volume ID is stored.

These tasks in particular are typically time-consuming to perform and require the services of a highly skilled IT professional however according to the present invention, the method steps are performed instead by the provisioning module 25 executing API calls. In order to set up the cloud-based render farm, the method according to the invention invokes the Amazon ® EC2 web service via the Typica client library. Once these steps have been performed, the cloud-based render farm controller 30 carries out the steps of allocating a storage volume in the cloud-based render farm, allocating an IP address to a head node 3 of the cloud-based render farm, and transmitting the IP address of the head node 3 to the rendering management server 23. It is important to note that this step is required to create a permanent IP address and is an optional step. According to the method of the present invention, the head node is provisioned and the method uses the "temporary" IP address assigned to it by Amazon. This temporary address exists only for the life of the head node instance. If the head node instance were to be stopped and restarted the IP address would change.

Once the IP address of the head node has been submitted to the rendering management server 23, the provisioning module 25 thereafter proceeds with provisioning a new instance of the head node machine image. This requires specifying, through the Amazon API: the ID of the Amazon Machine Image (AMI) for the head node, the instance type (specifies which type of virtual machine will run the AMI, e.g. LARGE, EXTRA-LARGE, HIGH MEMORY EXTRA LARGE, and the like), the availability zone, the security group to which the AMI will belong and the key pair name. Finally a running instance is requested through the API, and the system must wait for the cloud to provision the machine and then boot it up. Once the head node is running, the storage volume in the cloud is attached to the head node running instance and the provisioning module.

The next step comprises uploading the necessary components and software to the head node 3 that are required to manage the rendering on the cloud-based render farm side. This includes uploading a Java virtual machine, a provisioning module daemon, a Torque ® Job Manager , a web server which will host scripts for Render Nodes to access later on, and NFS, a system for managing shared filesystems. These software packages are then configured using the address of the head node instance as necessary (e.g., for a "server_name" file in the Torque configuration).

Once the head node and all of the required software services are running, the Provisioning Module provisions and launches new instances of the render node machine image. The provisioning module launches as many render node machine images as were specified originally by the operator.

In order to launch the render node machine images, the provisioning module daemon specifies, through the API: the ID of the Amazon Machine Image (AMI) for the render node, the instance type (specifies which type of virtual machine will run the AMI, e.g. LARGE, EXTRA-LARGE, HIGH MEMORY EXTRA LARGE, etc), the availability zone, the security group to which the AMI will belong, the key pair name, a user data variable which specifies the address of a script hosted by a web server running on the Head Node, and the desired number of running instances are requested through the API, and the system must wait for the cloud to provision these machines and then for them to boot up.

Once booted, the startup script, located by the user data variable (see above) is downloaded and executed. This results in the following steps being performed: Installing NFS, mounting the shared file system folder hosted by the Head Node, installing the Torque MOM and configuring it to work for the Torque Server running on the Head Node, starting the Torque ® MOM and rendering software and/or rendering software plugins may also be installed on the render nodes if not included on the base AMI chosen for the render farm.

Once the render nodes are booted, the provision module knows the address of each render node. It then connects to the Head Node via SSH and invokes operating system commands to add each render node to the Torque "nodes" file and starts the Torque pbs_server. The Torque MOM on each render node will connect to the Torque Server and the compute cluster of the render farm is now operational.

After each step, the state of the render farm is persisted in a database in the provisioning module in order to preserve the render farm state in case of failure of a subsequent step. This prevents the leaking of resources, i.e., losing track of what costly resources have been invoked on the cloud. These steps can then be rolled back if a subsequent step fails.

Once the render farm head node 3 and render nodes 5 are operational, the render job is sent by the rendering management server to the cloud-based render farm for processing. This will include transferring all of the files necessary to complete the rendering job including any texture files or other files referenced in the scene file and perhaps stored in another repository/library (not shown). The job manager on the head node will apportion the job out amongst the available render nodes, perform load balancing and provide basic fault tolerance. The results of the rendering will be stored in the storage volume 9 attached to the head node 3. On completion, the head node will return the rendered frames and any other rendering software output to the rendering management server 23 which in turn will allow access to the rendered files by the client machine 27 on the same file network.

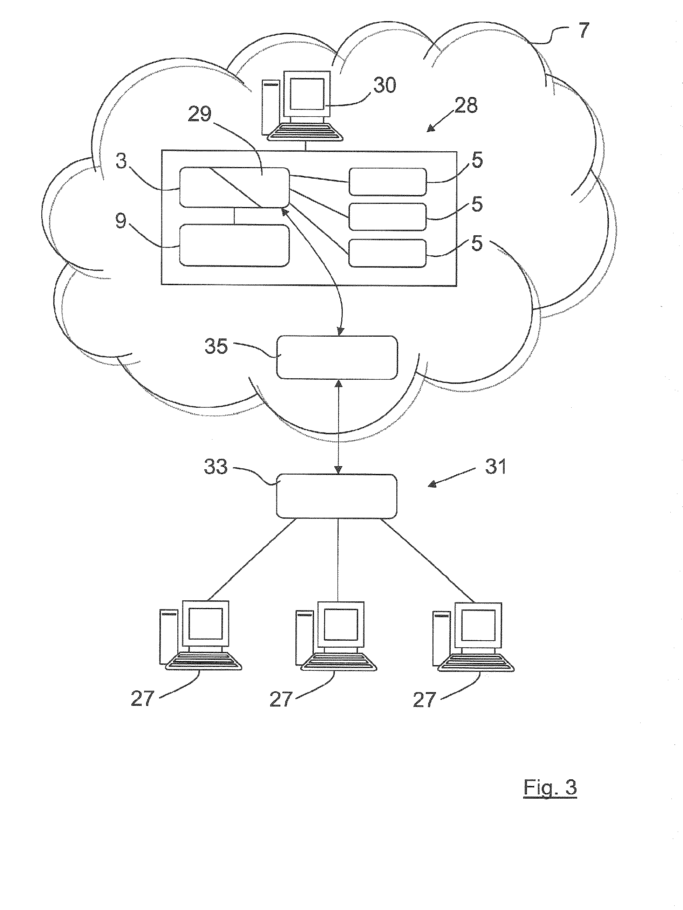

Referring to Figure 3, there is shown an alternative system, indicated generally by the reference numeral 31, in which the method according to the invention is performed, where like parts have been given the same reference numerals as before. The system and method operate in much the same way as described above with the exception that the provisioning module 35 is not located on the rendering management server 33 but instead is located in the cloud, or some other persistent host. The rendering management server 33 contacts the provisioning module 35 in the cloud when it is desired to set up a cloud-based render farm 28 and the steps of the provisioning module are performed from within the cloud. Furthermore, the Head Node IP address is transmitted to the rendering management server via the provisioning module 35. In this embodiment, where the provisioning module is located in the cloud, the public key of the rendering management server 33 is given to the render management daemon in the cloud to enable the render management daemon to refuse connections from any source other than the particular rendering management server 33 to which it "belongs".

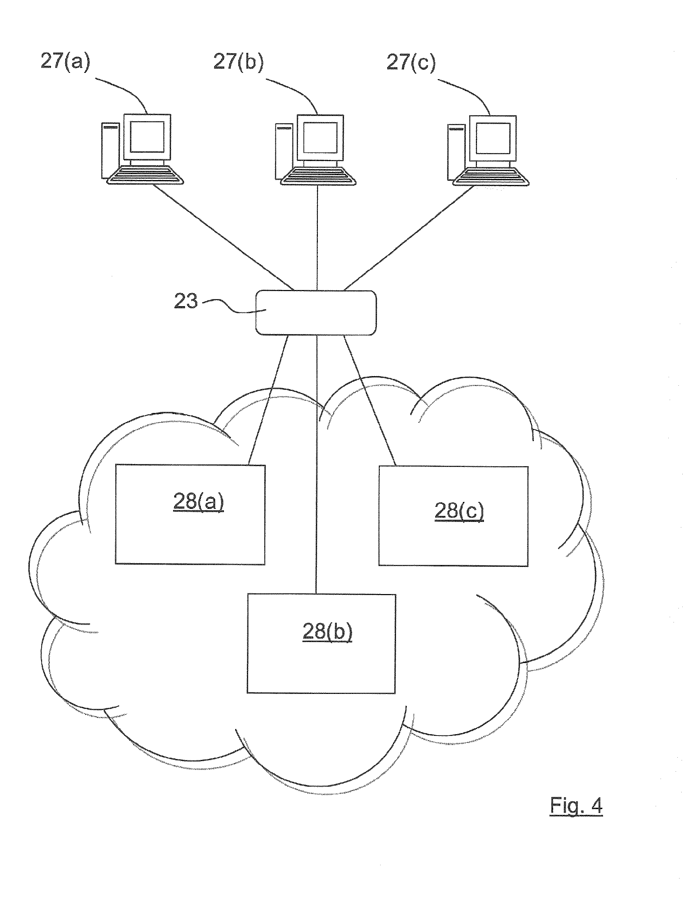

Referring to Figure 4 of the drawings, there is shown a system 41 in diagrammatic form illustrating how multiple cloud-based render farms 28(a), 28(b) and 28(c) can be set up to service multiple client devices 27(a), 27(b) and 27(c) respectively. It will be understood from the foregoing that these multiple render farms 28(a), 28(b) and 28(c) can be set up and managed by the IT personnel with relative ease. In the example shown, there is a one-to-one mapping of client devices 27(a), 27(b) and 27(c) to cloud-based render farms 28(a), 28(b) and 28(c) however this is not essential and there may be more than one client device associated with a particular render farm and indeed there may be more than one render farm associated with a particular client device. The figure also demonstrates how several cloud-based render farms 28(a), 28(b) and 28(c) can be located and managed through a single rendering management server 23. The provisioning module (not shown) can be located in the cloud or on the rendering management server 23.

Each of the client devices 27(a), 27(b) and 27(c) will have a rendering management server plug-in loaded thereon that will interact with the scene file generation software on the client device. The plug-ins allow communications between the client devices 27(a), 27(b) and 27(c) and the rendering management server 23. The rendering management server 23 has a standalone application that will match jobs coming in from the plug-ins on the client devices 27(a), 27(b) and 27(c) to the provisioning module daemons on the render farms 28(a), 28(b) and 28(c). The render farms 28(a), 28(b) and 28(c) will have a head node (not shown) and a plurality of render nodes (not shown). The head node will have the render management daemon running thereon. The render management daemon is a stand-alone application that can communicate back with the render management server.

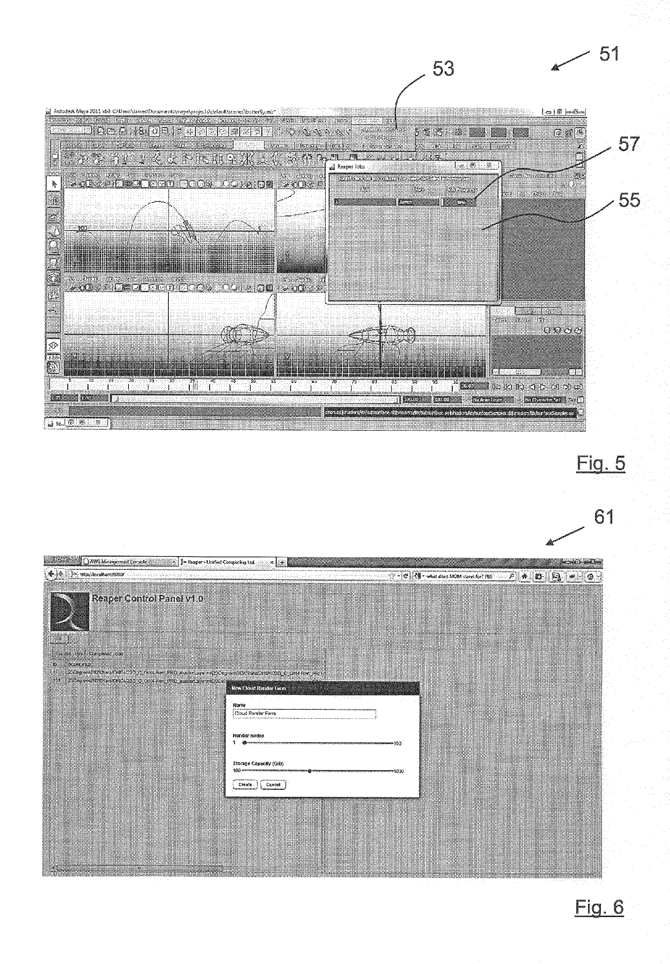

Referring to Figure 5, there is shown a screen shot taken from a 3D artist's scene file creation software package, in this case Maya ® indicated generally by the reference numeral 51. The artist uses this software package to create the necessary animation scene file. Once created, the artist uses a software package plug-in to send the scene file for rendering. The plug-in provides a drop down list menu 53 in the program GUI which in turn provides various functionality to the user including the options to submit a scene for rendering, view a current rendering job's progress and edit the server settings which inform the plugin as to the location of the render management server. There is shown a progress screen 55 with information relating to the jobs submitted by the artist for rendering. The progress screen contains a progress bar 57 which will be updated by calls made to the render management server which in turn calls the render management daemon on the cloud-based render farm and thereafter sends the required information back to the provisioning server so that the progress bar on the client machine can be updated. Alternatively, the render management server periodically calls the render management daemon for progress updates on all jobs. When the plugin on the client machine requests a progress update, the most recent update is immediately returned to the client. This reduces the waiting time on the client plugin side.

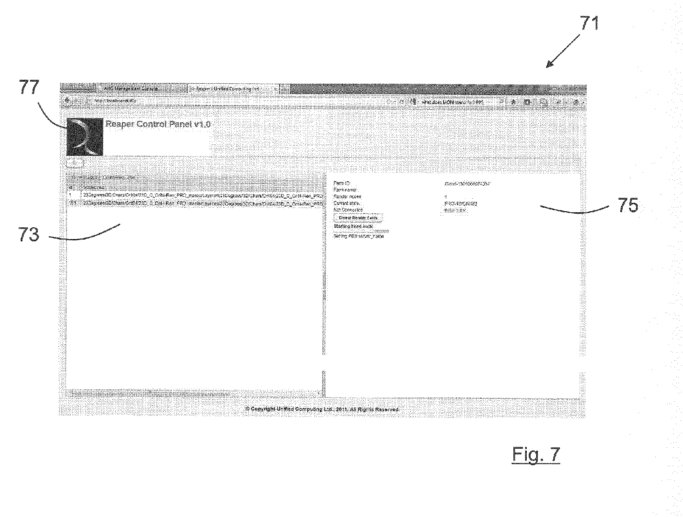

In one embodiment, the IT staff may then be presented with a screen, similar to that described below in relation to Figures 6 and 7, to create and manage the cloud-based render farm. In the preferred embodiment, the scene file rendering request will be sent to an IT person responsible for creating, managing and destroying cloud-based render farms and this IT person will control the aspects described below in relation to Figures 6 and 7.

Referring to Figures 6 and 7, there are shown a pair of screen shots, indicated generally by the reference numerals 61 and 71 respectively, showing the software user interface used to create, manage and destroy cloud-based render farms. Referring specifically to Figure 6, there is shown an input screen prompting the user to input the number of render nodes required and also to specify the amount of storage capacity required. Once this information is submitted to the rendering management server, the provisioning module (not shown) thereafter performs the method steps as outlined above to create the cloud-based render farm. No further interaction is required from the IT staff to set up the render farm.

Referring specifically to Figure 7, it can be seen that the IT person viewing the screen 71 will have a list 73 of all rendering jobs and a list of all available render farms 75. In order to render a specific job, all the IT person has to do is drag and drop the job from the list 73 onto the appropriate render farm icon in the list of render farms 75, or associate/link the specific job to a particular render farm in like manner to the drag and drop operation. It will be seen that there is provided a button 77 to instigate a cloud-based render farm creation. A context menu available by right clicking on a job in Panel 73 allows jobs to be deleted.

The drag and drop operation will now be described in greater detail: In this embodiment the Vaadin Java library is used for the GUI. Vaadin dynamically creates java script to create the required functionality in a web browser. To allow drag and drop, the target (Render farm in this case) which will receive drops is wrapped in a "DropWrapper" component. Other items are specified as droppable, such as the items in a table (Panel 73). In the drop wrapper, the method to be invoked is implemented when a drag and drop operation is performed. In the present embodiment, the steps are: a table row is dropped onto the render farm, the value of the Job ID field is retrieved from this row, the job is looked up and the job is submitted for rendering.

According to another aspect of the present invention, it is envisaged that the process can be automated even further still by providing a set of rules and policies that will allow the provisioning module to make decisions such as whether or not to create a cloud-based render farm using one provider or another, the number of nodes that should be used, when the jobs should be sent out to the render farms, the amount of storage area required by the rendering and so on. In this way, the most efficient rendering according to a predetermined profile and rules can be provided. The system may prompt users for approval for these decisions according to these rules, for example, if the cost of the appropriate cloud is outside of a given budget, finance staff may have to approve the farm creation.

In order to achieve the advantages of the above-defined methods and systems, it was necessary to build a plugin module which would create the appropriate command necessary to invoke the rendering software, stop the rendering software, and parse the rendering software's output to determine the progress of a render job. A plugin such as this must be built for each application supported by the system.

It will be understood that the method according to the present invention will be performed largely in software and therefore the present invention extends also to computer programs, on or in a carrier, comprising program instructions for causing a computer to carry out the method. The computer program may be in source code format, object code format or a format intermediate source code and object code. The computer program may be stored on or in a carrier, in other words a computer program product, including any computer readable medium, including but not limited to a floppy disc, a CD, a DVD, a memory stick, a tape, a RAM, a ROM, a PROM, an EPROM or a hardware circuit. In certain circumstances, a transmissible carrier such as a carrier signal when transmitted either wirelessly and/or through wire and/or cable could carry the computer program in which cases the wire and/or cable constitute the carrier.

It will be further evident that the present invention will be performed on more than one (processing) machine and even those parts of the method and system described in relation to a single processor or a single computer or machine could in fact be performed over two, three or more machines with certain parts of the computer-implemented method being performed by one device and other parts of the computer-implemented method being performed by another device. The devices may be part of a LAN, WLAN or could be connected together over a communications network including but not limited to the internet.

Many of the method steps could be performed "in the cloud", meaning that remotely located processing power may be utilised to process certain method steps of the present invention. It will be further understood that many of the method steps may not be performed in the cloud but could still be performed remotely, by which it is meant that the method steps could be performed either on a separate machine in the same locality or jurisdiction or indeed on a separate machine or machines in several remote jurisdictions. Steps performed "in the cloud" may be performed in the same or in a different jurisdiction to the other steps and indeed the render farm itself could be located in more than one jurisdiction. The present invention and claims are intended to cover those instances where the method is performed across two or more machines located in one or more jurisdictions.

In this specification the terms "comprise, comprises, comprised and comprising" and the terms "include, includes, included and including" are all deemed totally interchangeable and should be afforded the widest possible interpretation.

The invention is in no way limited to the embodiment hereinbefore described but may be varied in both construction and detail within the scope of the specification.

## Claims

1. A method of provisioning a cloud-based render farm comprising the steps of:
a rendering management server receiving from an operator:
(b) the desired number of nodes required in the cloud-based render farm; and
(b) the desired amount of storage capacity required in the cloud-based
render farm; and thereafter
a provisioning module accessible by the rendering management server in conjunction with a controller of the cloud-based render farm carrying out the following steps:
(c) setting a region and an availability zone for the cloud-based render farm;
(d) creating a security group for the render farm;
(e) creating an encryption key pair for communication with the cloud-based render farm; and thereafter
the cloud-based render farm controller carrying out the following steps:
(f) allocating a storage volume in the cloud-based render farm; and
(g) allocating an identifying address to a head node of the cloud-based render farm; and
(h) transmitting the identifying address of the head node to the rendering management server.

2. A method as claimed in claim 1 in which the rendering management server also receives the following from the operator:
(i) the server attributes of each node, such as the number of processing cores, the processing capacity of each core and the amount of RAM per render node; and
(k) an indication of the rendering software and plugins required on the farm.

3. A method as claimed in claim 1 or 2 in which the provisioning module is located in the cloud remotely from the rendering management server and the method comprises the additional steps of:
(I) the rendering management server transmitting the desired number of nodes required in the cloud-based render farm and the desired amount of storage capacity required in the render farm to the remote provisioning module; and
(m) the identifying address of the head node is transmitted to the rendering management server via the provisioning module.

4. A method as claimed in any preceding claim comprising the step of the provisioning module invoking the cloud controller to start up a new instance of the head node machine image.

5. A method as claimed in claim 4 in which once the new instance of the head node machine image is running, the method comprises the additional step of attaching the storage volume to the running instance of the head node.

6. A method as claimed in claim 5 comprising the step of the provisioning module launching new instances of a render node machine image.

7. A method as claimed in claim 6 comprising the steps of:
after the render node is running, the render node retrieving a start-up script from the head node; and
the render node executing the start-up script.

8. A method as claimed in claims 4 to 7 in which the step of starting up a new instance of the head node machine image comprises providing a rendering management server daemon for installation on the head node.

9. A method as claimed in claims 4 to 8 in which the step of starting up a new instance of the head node machine image comprises providing a job manager for installation on the head node.

10. A method as claimed in claims 3 to 9 in which the step of starting up a new instance of the head node machine image comprises providing a Java Virtual Machine for installation on the head node.

11. A method as claimed in claims 3 to 9 in which the step of starting up a new instance of the head node machine image comprises providing a binary code program for installation on the head node.

12. A method as claimed in any of claims 3 to 11 in which the steps of starting up a new instance of the head node machine image and launching new instances of a render node machine image are performed by the provisioning module performing remote secure shell (SSH) commands on the cloud-based render farm.

13. A method as claimed in any preceding claim in which steps (c) to (h) are executed through Application Programming Interface (API) calls.

14. A method as claimed in any preceding claim in which the state of the render farm is persisted after completion of each of steps (c) through (g).

15. A method as claimed in any preceding claim in which step (d) further comprises setting firewall rules.
